(19) Europäisches Patentamt
European Patent Office
Office européen des brevets

(11) **EP 2 149 979 B1**

(12) **EUROPÄISCHE PATENTSCHRIFT**

(45) Veröffentlichungstag und Bekanntmachung des Hinweises auf die Patenterteilung:
**19.10.2011   Patentblatt 2011/42**

(51) Int Cl.:
*H02P 7/29* (2006.01)  *G01P 3/489* (2006.01)
*G05B 19/19* (2006.01)  *H03M 1/08* (2006.01)
*H02M 3/335* (2006.01)

(21) Anmeldenummer: **09166534.9**

(22) Anmeldetag: **28.07.2009**

(54) **Verfahren zur Messwertermittlung in einem getaktet angesteuerten System**

Method for determining measurement values in a switched mode controlled system

Procédé de détermination de la valeur de mesure dans un système commandé de manière cadencée

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.08.2008   DE 102008040927**

(43) Veröffentlichungstag der Anmeldung:
**03.02.2010   Patentblatt 2010/05**

(73) Patentinhaber: **Robert Bosch GmbH**
**70442 Stuttgart (DE)**

(72) Erfinder:
• **Schmidtlein, Andreas**
**71732 Tamm (DE)**
• **Baumgaertner, Rainer**
**74397 Pfaffenhofen (DE)**

(56) Entgegenhaltungen:
**DE-A1- 10 359 224      DE-A1-102005 013 143**
**JP-A- 54 104 766       US-A1- 2005 231 253**
**US-A1- 2007 109 821**

EP 2 149 979 B1

# EP 2 149 979 B1

## Beschreibung

Die Erfindung beschreibt ein Verfahren zur Messwertermittlung in einem getaktet angesteuerten System. Insbesondere bezieht sich die vorliegende Erfindung auf ein Verfahren zur Messwertermittlung in einem getaktet angesteuerten System zur Strom-/Lasterfassung.

Stand der Technik

In getakteten Systemen besteht oft die Notwendigkeit, parallel - also mehr oder weniger gleichzeitig - zur Ansteuerung Messwerte aufzunehmen. Von der Ansteuerung abhängige Messwerte stellen dabei erhöhte Anforderungen an die Messwertaufbereitung. Gebräuchliche Verfahren, die z.B. mit analogen Filtern arbeiten, sind schwer zu realisieren. Ihre entsprechende Auslegung ist statisch und kann im Betrieb nicht angepasst werden. Zwar kann durch Verwendung von Sample- and Hold-Gliedern diese Situation verbessert werden, jedoch stößt in Systemen, in denen sich die Ansteuerung fortlaufend ändert und/oder in denen ein zusätzliches, evtl. sogar variierendes Störsignal dem Messsignal überlagert ist, auch die Auslegung der Messumgebung mit Hilfe von Sample- and Hold-Gliedern an ihre Grenzen.

Dokument DE 103 59 224 A1 offenbart eine Vorrichtung und ein Verfahren zur Erfassung der Nachlaufspannung eines Gleichstrommotors, wobei der Gleichstrommotor durch eine getaktete Ansteuerung betrieben wird. Dabei weist die getaktete Ansteuerung wenigstens während des Einschaltvorgangs des Motors ein vorgebbares Puls/Pulspausenverhältnis auf. Weiterhin ist wenigstens ein Auswertemittel vorgesehen, welches die Nachlaufspannung aus einer die Nachlaufspannung des Gleichstrommotors repräsentierenden Nachlaufspannungsgröße erfasst.

Dokument US 2007/0109821 Al offenbart eine Steuereinrichtung zur Steuerung eines Ausgangsstroms der Primärseite einer Stromversorgungseinrichtung mit einem Integrierer, der ein integriertes Ausgangssignal als Integration eines Stromsignals über ein Zeitsignal bildet.

Vorteile der Erfindung

Die vorliegende Erfindung überwindet die oben beschriebene Problematik durch Bereitstellung eines Verfahrens gemäß Anspruch 1 zur Messwertermittlung in einem getaktet angesteuerten System, wobei die Taktung Ansteuerungszeiträume aufweist, in denen das System angesteuert wird und in denen eine erste Schalterfunktion den Wert 1 annimmt, und Nichtansteuerungszeiträume aufweist, in denen das System nicht angesteuert wird und in denen die erste Schalterfunktion den Wert 0 annimmt, wobei das Verfahren folgende Schritte umfasst: Bestimmen von ersten Integrationszeiträumen in Abhängigkeit von der Taktung, wobei die ersten Integrationszeiträume innerhalb wenigstens zwei getrennter Ansteuerungszeiträume liegen, und/oder Bestimmen von zweiten Integrationszeiträumen in Abhängigkeit von der Taktung, wobei die zweiten Integrationszeiträume innerhalb wenigstens zwei getrennter Nichtansteuerungszeiträume liegen, durch Ermitteln einer zweiten Schalterfunktion auf der Basis der ersten Schalterfunktion in Abhängigkeit von wenigstens einem individuellen Parameter des Systems, Erfassen einer von der Ansteuerung abhängigen Messgröße des Systems, Ermitteln von Summations- und/oder Integrationswerten durch Summation und/oder Integration der mit der zweiten Schalterfunktion gewichteten Messgröße während der ersten und/oder zweiten Integrationszeiträume, Ermitteln einer Gesamtansteuerungszeitdauer durch Summation und/oder Integration der zweiten Schalterfunktion während der ersten und/oder zweiten Integrationszeiträume, und Ermitteln des Messwertes für wenigstens zwei getrennte Ansteuerungszeiträume und/oder Nichtansteuerungszeiträume durch Normierung der Summations- und/oder Integrationswerte auf die ermittelte Gesamtansteuerungszeitdauer.

Das erfindungsgemäße Verfahren hat den Vorteil, dass es während des Betriebs des getaktet angesteuerten Systems anpassbar ist. Zusätzlich erlaubt dieses Verfahren eine Messwerterfassung über mehrere Ansteuerungszeiträume. Dadurch sind präzise Messwertaufnahmen nicht nur in Nichtansteuerungszeiträumen, sondern auch in Ansteuerungszeiträumen möglich, in welchen die Anwendung konventioneller Verfahren z. B. wegen notwendiger Einschwingzeiten und physikalischer Begrenzungen aussichtslos ist.

Das Bestimmen der ersten und/oder zweiten Integrationszeiträume erfolgt in Abhängigkeit von wenigstens einem individuellen Parameter des Systems. Dieser individuelle Parameter kann dabei ein systemimmanenter Parameter sein, also ein Parameter, der durch die hardware- und/oder softwaremäßige Konfiguration des Systems selbst gegeben ist, oder aber auch ein vom System ausgegebener Messwert. Dadurch kann eine Rückkopplungsmöglichkeit vom System zurück zur Messumgebung geschaffen werden, wodurch ein Regelkreislauf zwischen System und Messumgebung realisierbar ist.

Vorzugsweise wird bei den individuellen Parametern die Trägheit des Systems und/oder seiner Messumgebung berücksichtigt. Dadurch können physikalische Realitäten, wie z. B. endliche Flankensteilheiten bei Mess- und/oder Ansteuerungssignalen sowie Schaltverzögerungen durch Induktivitäten und Kapazitäten bei den Ansteuer- und/oder Messvorgängen einkalkuliert werden. Dabei ist es insbesondere vorteilhaft, bei den individuellen Parametern die Zeitverzögerung zu berücksichtigen, mit der das System auf die Ansteuerungen reagiert. So- können z. B. durch zeitliche Verzögerung des Integrationszeitraums die Verzögerungen des Schaltersignals sowie die Verzögerungen bei den Durchschaltvorgängen an einer Funktionseinheit des Systems ausgeglichen werden.

Ferner ist es vorteilhaft, bei den individuellen Parametern die Zeitverzögerung bei der Durchführung von einem oder mehreren der Schritte des erfindungsgemäßen Verfahrens zu berücksichtigen, insbesondere beim Erfassen der von der Ansteuerung abhängigen Messgröße des Systems, beim Ermitteln von Summations- und/oder Integrationswerten durch Summation und/oder Integration der Messgröße während der ersten und/oder zweiten Integrationszeiträume, und beim Ermitteln des Messwertes für wenigstens einen der Ansteuerungszeiträume und/oder Nichtansteuerungszeiträume auf Grundlage von Zeitdaten der ersten und/oder zweiten Integrationszeiträume und von den ermittelten Summationsund/oder Integrationswerten.

Gemäß einer vorteilhaften Ausführungsform der Erfindung umfasst der Schritt des Ermittelns von Summations- und/oder Integrationswerten durch Summation und/oder Integration der Messgröße während der ersten und/oder zweiten Integrationszeiträume die Verwendung von digitaler Summation und/oder analoger Integration. Durch eine solche Mischrealisierung können die Stärken beider Varianten jeweils optimal genutzt werden.

Dabei ist die Mischung mindestens eines analogen Integrationsschrittes mittels eines Spannungs-/Frequenzzwandlers und mindestens einer digitalen Summation mittels einer Hardwarelogik aus Zählern besonders vorteilhaft. Auch die Mischung mindestens eines analogen Integrationsschrittes mittels Delta/Sigma-Modulatoren und mindestens einer digitalen Summation mittels einer Hardwarelogik aus Zählern ist denkbar.

Vorzugsweise enthält das getaktet angesteuerte System wenigstens ein stromdurchflossenes Bauelement, das einen ohmschen Charakter aufweist, wobei die Stromstärke durch dieses Bauelement von der Taktung abhängt, und wobei die von der Ansteuerung abhängige Messgröße des Systems der Spannungsabfall an diesem stromdurchflossenen Bauelement ist.

Dabei ist es von Vorteil, wenn die Summations- und/oder Integrationswerte nur während der ersten Integrationszeiträume innerhalb wenigstens eines der Ansteuerungszeiträume ermittelt werden. Das so gestaltete Verfahren hat den Vorteil, dass die Messdauer je nach gewünschter Messgenauigkeit gewählt werden kann. Außerdem ermöglicht dieses Verfahren eine Messwertermittlung über mehrere Ansteuerungszeiträume. Hierdurch sind präzise Strom-Messwertaufnahmen auch in Ansteuerungszeiträumen möglich, wo herkömmliche Verfahren z. B. wegen Einschwingzeiten und physikalischen Begrenzungen aussichtslos sind.

Gemäß einer besonders bevorzugten Ausführungsform des erfindungsgemäßen Verfahrens umfasst die Messwertermittlung die Ermittlung wenigstens eines mittleren Stromwertes.
Vorzugsweise ist dabei das stromdurchflossene Bauelement ein Shunt-Widerstand im Ansteuerpfad des Systems oder eine Leiterbahn mit bekanntem Innenwiderstand, welche das System aufweist. Alternativ kann das stromdurchflossene Bauelement der zur Taktung des Systems verwendete Schalter sein. Auf Grundlage des ermittelten Messwertes für den Spannungsabfall kann dann eine Erfassung des Schalterzustands durchgeführt werden.

Weitere Merkmale und Vorteile von Ausführungsformen der Erfindung ergeben sich aus der nachfolgenden Beschreibung mit Bezug auf die beigefügten Figuren.

Kurzbeschreibung der Figuren

Es zeigen:

Fig. 1 einen möglichen Ablauf des erfindungsgemäßen Verfahrens,

Fig. 2 eine erläuternde Darstellung eines vorteilhaften Zusammenwirkens der Schritte des erfin- dungsgemäßen Verfahrens,

Fig. 3 den zeitlichen Verlauf verschiedener Signale im Rahmen der Durchführung des erfindungs- gemäßen Verfahrens,

Fig. 4 eine erläuternde Darstellung eines vorteilhaften Zusammenwirkens der Schritte des erfin- dungsgemäßen Verfahrens gemäß einer ersten Ausführungsform,

Fig. 5 eine erläuternde Darstellung eines vorteilhaften Zusammenwirkens der Schritte des erfin- dungsgemäßen Verfahrens gemäß einer zweiten Ausführungsform,

Fig. 6 eine erläuternde Darstellung eines vorteilhaften Zusammenwirkens der Schritte des erfin- dungsgemäßen Verfahrens gemäß der besonders bevorzugten Ausführungsform, und

Fig. 7    eine schematische Darstellung zweier Realisierungen der besonders bevorzugten Ausfüh- rungsform.

Beschreibung der Ausführungsbeispiele

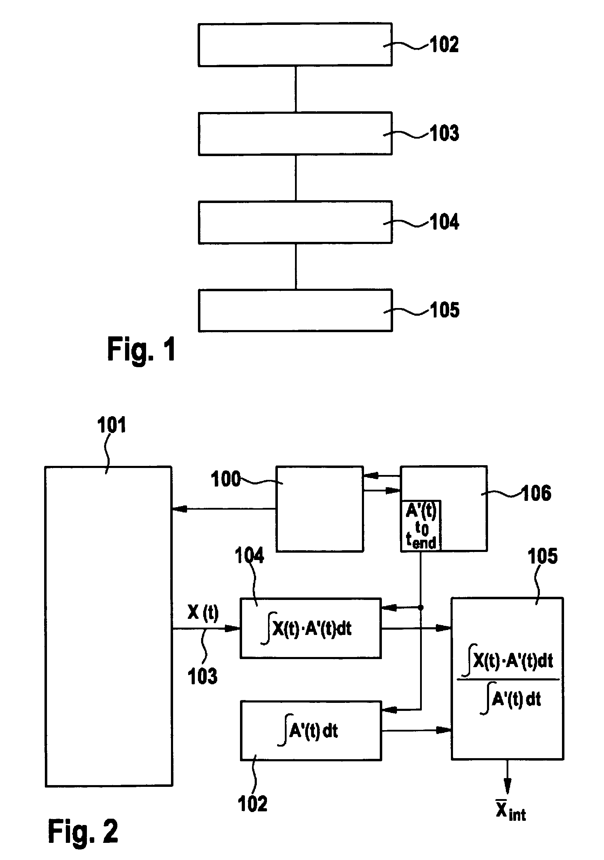

Zunächst werden anhand der Fig. 1 die verschiedenen Möglichkeiten erläutert, wie das erfindungsgemäße Verfahren ablaufen kann. Dieses Verfahren wird eingesetzt zur Messwertermittlung in einem getaktet angesteuerten System 101, wobei die Taktung Ansteuerungszeiträume aufweist, in denen das System 101 angesteuert wird, und Nichtansteuerungszeiträume aufweist, in denen das System 101 nicht angesteuert wird.

Gemäß einem bevorzugten Verfahrensablauf werden zunächst erste Integrationszeiträume in Abhängigkeit von der Taktung bestimmt, wobei die ersten Integrationszeiträume innerhalb wenigstens eines der Ansteuerungszeiträume liegen (Schritt 102.1). Zusätzlich oder alternativ dazu werden zweite Integrationszeiträume in Abhängigkeit von der Taktung bestimmt, wobei die zweiten Integrationszeiträume innerhalb wenigstens eines der Nichtansteuerungszeiträume liegen (Schritt 102.2). Durch dieses Vorgehen wird also eine Separierung von Integrationsvorgängen erreicht, und zwar einerseits in Integrationsvorgänge während Ansteuerphasen und andererseits in Integrationsvorgänge während Nichtansteuerphasen. Die Integrationsvorgänge können sich dabei über mehrere voneinander getrennte Ansteuerphasen bzw. Nichtansteuerphasen erstrecken, sie können aber auch genauso gut nur über einen Teil einer einzigen Ansteuerphase bzw. Nichtansteuerphase laufen.

Dann wird eine von der Ansteuerung abhängige Messgröße des Systems 101 erfasst (Schritt 103). Dies kann z.B. die Spannung sein, die über einer bestimmten Komponente des Systems 101 abfällt. Es ist aber auch jede andere Messgröße denkbar.

Nun werden durch Summation und/oder Integration der Messgröße während der ersten und/oder zweiten Integrationszeiträume Summations- und/oder Integrationswerte ermittelt (Schritt 104). Dabei kann die Durchführung des Schrittes 104 die Verwendung von digitaler Summation und/oder analoger Integration umfassen, also wahlweise nur auf Grundlage digitaler Summation oder analoger Integration, oder auf Grundlage einer Mischung aus den beiden Varianten. Generell gilt für die gesamte Darstellung der vorliegenden Erfindung, dass nicht notwendigerweise integriert werden muss, sondern in der tatsächlichen Realisierung aller Verfahrensschritte jegliche Näherungsverfahren eingesetzt werden können, wie z. B. diskrete digitale bzw. analoge Summation. Die grundlegenden Charakteristika des erfindungs- gemäßen Verfahrens sind von der Wahl des verwendeten Integrationsverfahrens unabhängig.

Anschließend wird auf Grundlage von Zeitdaten der ersten und/oder zweiten Integrationszeiträume und auf Grundlage von den ermittelten Summations- und/oder Integrationswerten der Messwert für wenigstens einen der Ansteuerungszeiträume und/oder Nichtansteuerungszeiträume ermittelt (Schritt 105). Als die Zeitdaten der ersten und/ oder zweiten Integrationszeiträume kommen in erster Linie der jeweilige zeitliche Anfang und das jeweilige zeitliche Ende des Integrationszeitraums in Frage. Aus diesen Daten kann letztlich auch die Dauer des jeweiligen Integrationszeitraums ermittelt werden, der wie oben bereits erläutert nicht an einem einzigen Stück vorliegen muss.

Es wird betont, dass der in Fig. 1 dargestellte Ablauf der Verfahrensschritte rein exemplarisch ist. Es ist auch eine andere Abfolge der Schritte denkbar. So kann z. B. das Bestimmen der ersten und/oder zweiten Integrationszeiträume zu jedem beliebigen Zeitpunkt des Verfahrens erfolgen. Auch das Erfassen der von der Ansteuerung abhängigen Messgröße des Systems muss nicht notwendigerweise nach dem Bestimmen der ersten und/oder zweiten Integrationszeiträume erfolgen, sondern die Messgröße kann auch vorher, quasi auf Vorrat, erfasst und evtl. aufgezeichnet werden.

Im Folgenden wird unter Bezugnahme auf die Fign. 1, 2 und 3 anhand des zeitlichen Verlaufs verschiedener Signale im Rahmen der Durchführung des erfindungsgemäßen Verfahrens ein vorteilhaftes Zusammenwirken der Schritte des erfindungsgemäßen Verfahrens dargestellt.

Das zu messende Signal X(t) 202, also die von der Ansteuerung abhängige Messgröße des Systems 101, wird im Schritt 103 erfasst und an den Eingang einer Auswertelogik geführt. Die Auswertelogik berechnet, beispielsweise durch Integration, das Integral $X_{int}$ während der Ansteuerungszeiträume des Schalters, also in denjenigen Zeiträumen, in denen die Schalterfunktion A(t) den Wert 1 annimmt. Da reale Systeme nur endliche Flankensteilheiten aufweisen, reagiert sowohl das System 101 sowie dessen Messumgebung lediglich zeitverzögert. Deshalb beschreibt die für die Erfassung der Messgröße relevante Schalterfunktion A'(t) 201 die Ansteuerung 100 unter Berücksichtigung der individuellen physikalischen Gegebenheiten, wie Schaltverzögerungen, Induktivitäten und Kapazitäten. Im Gegensatz zur eigentlichen Schalteransteuerung A(t) (nicht dargestellt) sind bei der relevanten Schalterfunktion A'(t) nur die für die Messung relevanten Zeitpunkte durch einen Funktionswert gleich 1 gekennzeichnet. A'(t) kann aus A(t) beispielsweise durch eine zeitliche Verschiebung hervorgehen, z. B. durch Verschiebung um wenige Mikrosekunden, um die Durchschaltvorgänge am Motorschalter des Systems 101 zu berücksichtigen. Eine weitere Möglichkeit ist die völlig freie Definierung der Schalterfunktion A'(t), z. B. dass die positive, also ansteigende Flanke von A'(t) einige x Mikrosekunden auf die positive Flanke von A(t) folgt, und ebenso frei definierbar die fallende Flanke von A'(t) einige y Mikrosekunden auf die fallende Flanke von A(t) folgt. Damit können z. B. induktiv verursachte Ansteuerbereiche von der Messung ausgeschlossen werden.

Für das Integral $X_{int}$ über die Messgröße X(t) während der Ansteuerungszeiträume gilt dann folgendes:

$$X_{int} = \int X(t) \cdot A'(t)\, dt \qquad \text{(Schritt 104)}$$

Zusätzlich umfasst die Auswertelogik eine Funktionalität zum Ermitteln der Gesamtansteuerungszeitdauer des Motorschalters während der Messdauer:

$$D_{int} = \int A'(t)\, dt \qquad \text{(Graph 203, Schritt 102)}$$

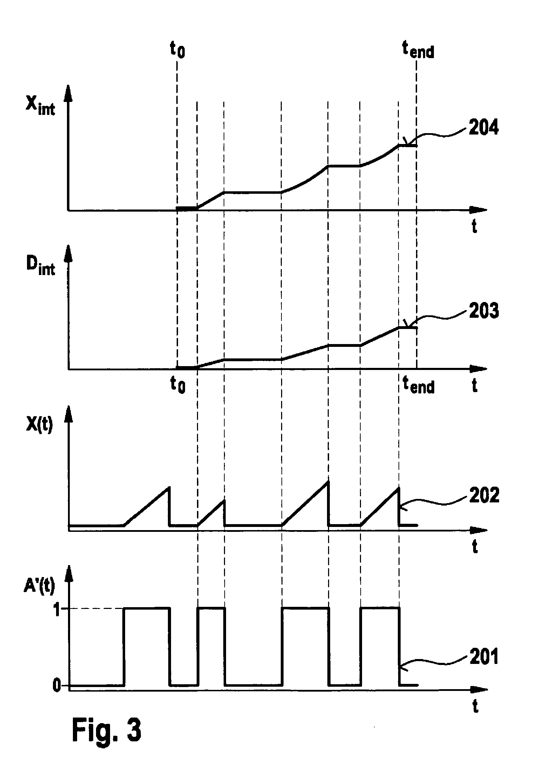

Vorzugsweise werden $X_{int}$ und $D_{int}$ synchron ermittelt. Damit ist die Messung über einen vorbestimmten Zeitraum möglich. Die Integrationsgrenzen sind in Fig. 3 mit $t_0$ und $t_{end}$ bezeichnet. Eine entsprechende Ablaufsteuerung 106 generiert A'(t) und $t_0$ und $t_{end}$ abhängig von der gewählten Realisierung. Die Auswertungs-Software ist dann in der Lage, z. B. den mittleren Spannungsabfall $\overline{X}_{int}$ im Messzeitraum auf Grundlage folgender Beziehung zu ermitteln:

$$\overline{X}_{int} = \frac{\displaystyle\int_{t_0}^{t_{end}} X(t) \cdot A'(t)\, dt}{\displaystyle\int_{t_0}^{t_{end}} A'(t)\, dt} \qquad \text{(Graph 204, Schritt 105)}$$

$\overline{X}_{int}$ stellt dann den im Schritt 105 ermittelten Messwert dar.

Das beschriebene Verfahren kann sowohl durch teilweise analoge Integration als auch durch digitale Summation realisiert werden. Eine Mischung von analoger Integration und digitaler Summation ist ebenfalls möglich.

Als konkrete Realisierungsmöglichkeiten kommen beispielsweise in Betracht:

- analoge Integration in HW Beschaltung;
- Überabtastung mit extrem schnellen und hochauflösenden Analog-/Digitalwandlem und anschließender Auswertung in Software. Der Integrationscharakter ist dann besonders gut erfüllt, wenn die Abtastfrequenz sehr hoch ist;
- Realisierung in Hardware unter Benutzung von schnellen Delta-/Sigma-Modulatoren mit anschließender Summierung über Hardware-Zähler;
- Verwendung von sehr schnellen Spannungs-/Frequenzwandlern mit nachgeschalteter Hardwarelogik aus Zählern.

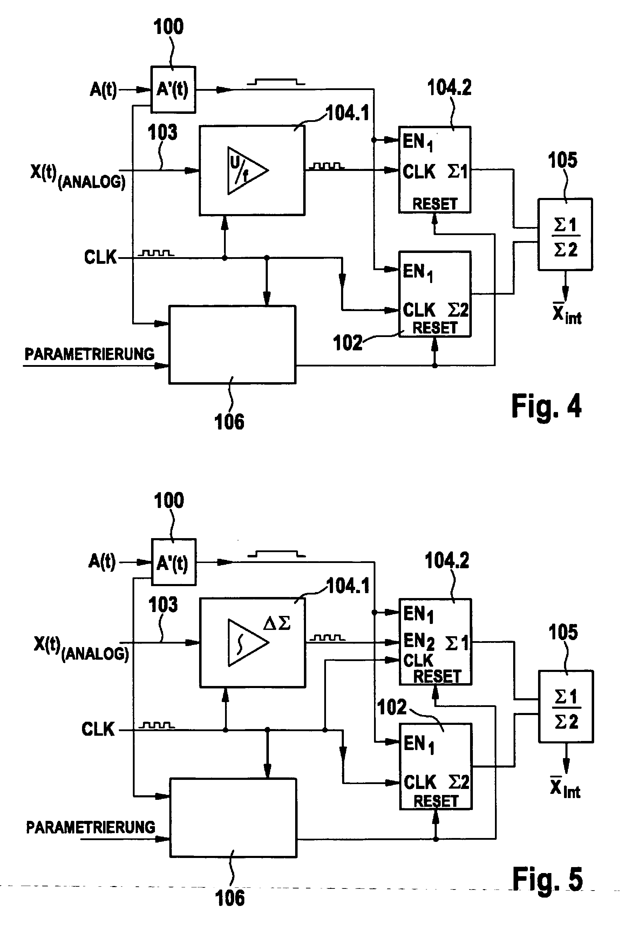

Fig. 4 zeigt eine erläuternde Darstellung eines vorteilhaften Zusammenwirkens der Schritte des erfindungsgemäßen Verfahrens gemäß einer ersten Ausführungsform. Das Verfahren wird hier mittels eines Spannungs-/Frequenzwandlers realisiert. In dieser ersten Ausführungsform ist die Integration (Schritt 104) als Mischrealisierung ausgeführt. Während Bezugsziffer 104.1 den analogen Integrationsschritt mittels Spannungs-/Frequenzwandler bezeichnet, steht Bezugsziffer 104.2 für die digitale Summation, z. B. mittels Zählern.

Fig. 5 zeigt eine erläuternde Darstellung eines vorteilhaften Zusammenwirkens der Schritte des erfindungsgemäßen Verfahrens gemäß einer zweiten Ausführungsform. Das Verfahren wird hier mittels Delta-/Sigma-Modulatoren realisiert. Während Bezugsziffer 104.1 den analogen Integrationsschritt mittels Delta-/Sigma-Modulatoren bezeichnet, steht Bezugsziffer 104.2 für die digitale Summation, z. B. mittels Zählern.

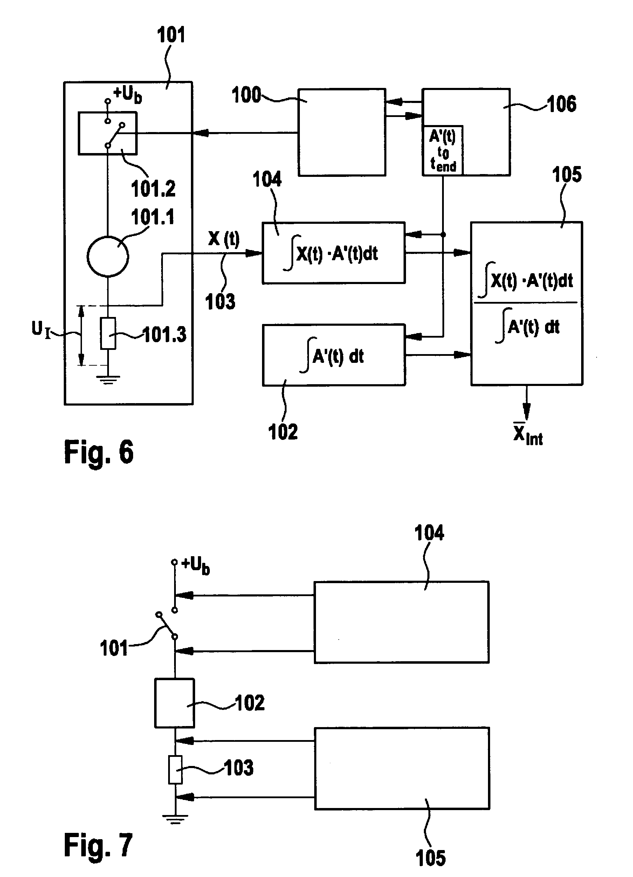

Anhand der Fign. 6 und 7 wird im Folgenden die Einbettung des erfindungsgemäßen Verfahrens in eine integrative Messmethode in getakteten Systemen zur Strom- und Lasterfassung beschrieben.

Fig. 6 zeigt eine erläuternde Darstellung eines vorteilhaften Zusammenwirkens der Schritte des erfindungsgemäßen Verfahrens in der integrativen Messmethode zur Strom- und Lasterkennung. Die Fig. 6 stimmt auf ihrer rechten Seite mit der Fig. 2 überein, weshalb zur Vermeidung von Wiederholungen bezüglich der gleichen Figurenbestandteile auf die entsprechenden Ausführungen weiter oben zu Fig. 2 verwiesen wird. Im linken Teil der Fig. 6 zeigt der Block "angesteuertes System" 101 den schematischen Lastpfad. Ein Beispiel für diesen Lastpfad stellt der Motorpfad einer DC-Motoransteuerung dar. Der Lastschalter 101.2, welcher vorzugsweise als Halbleiterschalter ausgeführt ist, wird angesteuert von der Lastansteuerung 100. Die Last 101.1 wird über den Lastschalter 101.2 mit der Spannungsversorgung $U_b$ verbunden. Die Ablaufsteuerung 106 generiert A'(t) und $t_0$ und $t_{end}$ A'(t) nimmt während der Ansteuerungsphase 102 den Wert 1 an. $t_0$ bezeichnet den Startzeitpunkt der Integrationsphase. $t_{end}$ bezeichnet den Endzeitpunkt der Integrationsphase.

Der Messshunt 101.3 wird von dem durch die Last 101.1 fließenden Strom I durchflossen. Der Strom I erzeugt im Messshunt 101.3 einen Spannungsabfall $U_I$. Der Spannungsabfall wird mittels integrativem Messverfahren gemessen. Die Messung erfolgt während der Ansteuerungsphasen, wobei selbst kleinste Spannungsimpulse vom integralen Messverfahren berücksichtigt werden. Der Startzeitpunkt $t_0$ und der Endzeitpunkt $t_{end}$ können frei gewählt werden. Je länger die gewählte Messzeit ist, also der zeitliche Abstand zwischen $t_0$ und $t_{end}$, desto genauer ist das Messergebnis.

Fig. 7 zeigt eine schematische Darstellung zweier Realisierungen der im Zusammenhang mit Fig. 6 beschriebenen Ausführungsform. Dabei steht der Block 105 für die integrative Strommessung am Shuntwiderstand 103, der seriell über die Last 102 mit einem Schalter 101 verbunden ist. Die eine Realisierung stellt die oben bereits beschriebene integrative Strommessung am Shuntwiderstand 103 dar. Die andere Realisierung wird durch den Block 104 symbolisiert, die integrative Messung des Spannungsabfalls am Schalter 101. Durch das an die Taktung gekoppelte integrative Messverfahren kann z. B. der am Innenwiderstand (RDSon) des Lastschalters 101 abfallende Spannungsabfall gemessen werden. Dadurch können in Verbindung mit einer Strommessung Aussagen über die thermische Belastung des Schalters 101 gemacht werden.

Das oben beschriebene Verfahren ist besonders gut für die ESP- oder die ABS-Motoransteuerung geeignet. Die Erfindung ist aber nicht auf die Anwendung in diesen Bereichen beschränkt.

**Patentansprüche**

1. Verfahren zur Messwertermittlung in einem getaktet angesteuerten System (101), wobei die Taktung Ansteuerungszeiträume aufweist, in denen das System (101) angesteuert wird und in denen eine erste Schalterfunktion (A(t)) den Wert 1 annimmt, und Nichtansteuerungszeiträume aufweist, in denen das System (101) nicht angesteuert wird und in denen die erste Schalterfunktion (A(t)) den Wert 0 annimmt, wobei das Verfahren folgende Schritte umfasst:

   - Bestimmen (102.1) von ersten Integrationszeiträumen in Abhängigkeit von der Taktung, wobei die ersten Integrationszeiträume innerhalb wenigstens zwei getrennter Ansteuerungszeiträume liegen, und/oder Bestimmen (102.2) von zweiten Integrationszeiträumen in Abhängigkeit von der Taktung, wobei die zweiten Integrationszeiträume innerhalb wenigstens zwei getrennter Nichtansteuerungszeiträume liegen, durch Ermitteln einer zweiten Schalterfunktion (A'(t)) auf der Basis der ersten Schalterfunktion (A(t)) in Abhängigkeit von wenigstens einem individuellen Parameter des Systems (101),
   - Erfassen (103) einer von der Ansteuerung abhängigen Messgröße (X(t)) des Systems (101),
   - Ermitteln (104) von Summations- und/oder Integrationswerten ($X_{int}$) durch Summation und/oder Integration der mit der zweiten Schalterfunktion (A'(t)) gewichteten Messgröße (X(t)) während der ersten und/oder zweiten Integrationszeiträume,
   - Ermitteln einer Gesamtansteuerungszeitdauer ($D_{int}$) durch Summation und/oder Integration der zweiten Schalterfunktion (A'(t)) während der ersten und/oder zweiten Integrationszeiträume, und
   - Ermitteln (105) des Messwertes für wenigstens zwei getrennte Ansteuerungszeiträume und/oder Nichtansteuerungszeiträume durch Normierung der Summations- und/oder Integrationswerte ($X_{int}$) auf die ermittelte Gesamtansteuerungszeitdauer ($D_{int}$).

2. Verfahren nach Anspruch 1, wobei bei den individuellen Parametern die Trägheit des Systems (101) und/oder seiner Messumgebung berücksichtigt wird.

3. Verfahren nach Anspruch 1 oder 2, wobei bei den individuellen Parametern die Zeitverzögerung berücksichtigt wird, mit der das System (101) auf die Ansteuerungen reagiert.

4. Verfahren nach einem der Ansprüche 1 bis 3, wobei bei den individuellen Parametern die Zeitverzögerung bei der Durchführung von einem oder mehreren der Schritte 103, 104 und 105 berücksichtigt wird.

5. Verfahren nach einem der Ansprüche 1 bis 4, wobei die Durchführung des Schrittes 104 die Verwendung von digitaler Summation und/oder analoger Integration umfasst.

6. Verfahren nach Anspruch 5, wobei die Durchführung des Schrittes 104 durch eine Mischung mindestens eines analogen Integrationsschrittes, beispielsweise mittels eines Spannungs-/Frequenzwandlers, und mindestens einer digitalen Summation, beispielsweise mittels einer Hardwarelogik aus Zählern, realisiert wird.

7. Verfahren nach Anspruch 5, wobei die Durchführung des Schrittes 104 durch eine Mischung mindestens eines analogen Integrationsschrittes, beispielsweise mittels Delta-/Sigma-Modulatoren, und mindestens einer digitalen Summation, beispielsweise mittels einer Hardwarelogik aus Zählern, realisiert wird.

8. Verfahren nach einem der vorangehenden Ansprüche, wobei das getaktet angesteuerte System (101) wenigstens ein stromdurchflossenes Bauelement enthält, das einen ohmschen Charakter aufweist, wobei die Stromstärke durch dieses Bauelement von der Taktung abhängt, und wobei die von der Ansteuerung abhängige Messgröße des Systems (101) der Spannungsabfall an diesem stromdurchflossenen Bauelement ist.

9. Verfahren nach Anspruch 8, wobei die Summations- und/oder Integrationswerte nur während der ersten Integrationszeiträume innerhalb wenigstens eines der Ansteuerungszeiträume ermittelt werden.

10. Verfahren nach Anspruch 8 oder 9, wobei das stromdurchflossene Bauelement ein ohmscher Widerstand, insbesondere ein Shunt-Widerstand, im Ansteuerpfad des Systems (101) ist.

11. Verfahren nach Anspruch 8 oder 9, wobei das stromdurchflossene Bauelement eine Leiterbahn mit bekanntem Innenwiderstand ist, welche das System (101) aufweist.

12. Verfahren nach Anspruch 8 oder 9, wobei das stromdurchflossene Bauelement ein Schalter zur Taktung des Systems (101) ist.

13. Verfahren nach Anspruch 12, wobei auf Grundlage des ermittelten Messwertes eine Erfassung des Schalterzustands durchgeführt wird.

**Claims**

1. Method for determining measured values in a system (101) which is driven in a clocked manner, the clocking having driving periods, in which the system (101) is driven and in which a first switch function (A(t)) assumes the value 1, and non-driving periods in which the system (101) is not driven and in which the first switch function (A(t)) assumes the value 0, the method comprising the following steps of:

   - determining (102.1) first integration periods on the basis of the clocking, the first integration periods being within at least two separate driving periods, and/or determining (102.2) second integration periods on the basis of the clocking, the second integration periods being within at least two separate non-driving periods, by determining a second switch function (A'(t)) on the basis of the first switch function (A(t)) on the basis of at least one individual parameter of the system (101),
   - recording (103) a measurement variable (X(t)) of the system (101), which measurement variable depends on the driving,
   - determining (104) summation and/or integration values ($X_{int}$) by summing and/or integrating the measurement variable (X(t)) weighted with the second switch function (A'(t)) during the first and/or second integration periods,
   - determining a total driving duration (Dint) by summing and/or integrating the second switch function (A'(t)) during the first and/or second integration periods, and
   - determining (105) the measured value for at least two separate driving periods and/or non-driving periods by normalizing the summation and/or integration values ($X_{int}$) to the total driving duration (Dint) determined.

2. Method according to Claim 1, the inertia of the system (101) and/or of its measurement environment being taken into account in the individual parameters.

3. Method according to Claim 1 or 2, the time delay with which the system (101) responds to the driving operations being taken into account in the individual parameters.

4. Method according to one of Claims 1 to 3, the time delay when carrying out one or more of the steps 103, 104 and 105 being taken into account in the individual parameters.

5. Method according to one of Claims 1 to 4, the operation of carrying out the step 104 comprising the use of digital summation and/or analogue integration.

6. Method according to Claim 5, the step 104 being carried out by mixing at least one analogue integration step, for example using a voltage/frequency converter, and at least one digital summation, for example using hardware logic comprising counters.

7. Method according to Claim 5, the step 104 being carried out by mixing at least one analogue integration step, for example using delta/sigma modulators, and at least one digital summation, for example using hardware logic comprising counters.

8. Method according to one of the preceding claims, the system (101) which is driven in a clocked manner containing at least one component through which current flows and which has a resistive character, the current intensity through this component depending on the clocking, and the measurement variable of the system (101), which is dependent on the driving, being the voltage drop across this component through which current flows.

9. Method according to Claim 8, the summation and/or integration values being determined only during the first integration periods within at least one of the driving periods.

10. Method according to Claim 8 or 9, the component through which current flows being a non-reactive resistor, in particular a shunt resistor, in the drive path of the system (101).

11. Method according to Claim 8 or 9, the component through which current flows being a conductor track with a known internal resistance, the system (101) having said conductor track.

12. Method according to Claim 8 or 9, the component through which current flows being a switch for clocking the system (101).

13. Method according to Claim 12, the switch state being detected on the basis of the measured value determined.


**Revendications**

1. Procédé de détermination de la valeur mesurée dans un système (101) à amorçage synchronisé, dans lequel la synchronisation présente des périodes d'amorçage pendant lesquelles le système (101) est amorcé et pendant lesquelles une première fonction d'interrupteur (A(t)) adopte la valeur 1, et présente des périodes de non-amorçage pendant lesquelles le système (101) n'est pas amorcé et pendant lesquelles la première fonction d'interrupteur (A(t)) adopte la valeur 0, le procédé comprenant les étapes consistant à :

   - définir (102.1) des premières périodes d'intégration en fonction de la synchronisation, les premières périodes d'intégration se trouvant à l'intérieur d'au moins deux périodes d'amorçage séparées, et/ou définir (102.2) des deuxièmes périodes d'intégration en fonction de la synchronisation, les deuxièmes périodes d'intégration se trouvant à l'intérieur d'au moins deux périodes de non-amorçage séparées, en déterminant une deuxième fonction d'interrupteur (A' (t)) sur la base de la première fonction d'interrupteur (A(t)) en fonction d'au moins un paramètre individuel du système (101),
   - détecter (103) une grandeur mesurée (X(t)) du système (101), dépendant de l'amorçage,
   - déterminer (104) des valeurs d'addition et/ou d'intégration ($X_{int}$) par addition et/ou intégration de la grandeur mesurée (X(t)) pondérée par la deuxième fonction d'interrupteur (A'(t)) pendant les premières et/ou deuxièmes périodes d'intégration,
   - déterminer une durée d'amorçage totale (Dint) par addition et/ou intégration de la deuxième fonction d'interrupteur (A'(t)) pendant les premières et/ou deuxièmes périodes d'intégration, et
   - déterminer (105) la valeur mesurée pour au moins deux périodes d'amorçage et/ou périodes de non-amorçage séparées en normalisant les valeurs d'addition et/ou d'intégration ($X_{int}$) sur la durée d'amorçage totale (Dint) déterminée.

2. Procédé selon la revendication 1, dans lequel l'inertie du système (101) et/ou de son environnement de mesure est prise en compte dans les paramètres individuels.

3. Procédé selon la revendication 1 ou 2, dans lequel la temporisation avec laquelle le système (101) répond aux amorçages est prise en compte dans les paramètres individuels.

**4.** Procédé selon l'une quelconque des revendications 1 à 3, dans lequel la temporisation lors de l'exécution d'une ou de plusieurs des étapes 103, 104 et 105 est prise en compte dans les paramètres individuels.

**5.** Procédé selon l'une quelconque des revendications 1 à 4, dans lequel l'exécution de l'étape 104 comprend l'utilisation de l'addition numérique et/ou de l'intégration analogique.

**6.** Procédé selon la revendication 5, dans lequel l'exécution de l'étape 104 est réalisée par une combinaison d'au moins une étape d'intégration analogique, par exemple au moyen d'un convertisseur tension/fréquence, et d'au moins une addition numérique, par exemple au moyen d'un élément logique matériel composé de compteurs.

**7.** Procédé selon la revendication 5, dans lequel l'exécution de l'étape 104 est réalisée par une combinaison d'au moins une étape d'intégration analogique, par exemple au moyen de modulateurs delta/sigma, et d'au moins une addition numérique, par exemple au moyen d'un élément logique matériel composé de compteurs.

**8.** Procédé selon l'une quelconque des revendications précédentes, dans lequel le système (101) à amorçage synchronisé comprend au moins un composant traversé par le courant à caractère ohmique, dans lequel l'intensité de courant passant par ce composant dépend de la synchronisation, et dans lequel la grandeur mesurée du système (101) dépendant de l'amorçage est la chute de tension au niveau de ce composant traversé par le courant.

**9.** Procédé selon la revendication 8, dans lequel les valeurs d'addition et/ou d'intégration sont déterminées uniquement pendant les premières périodes d'intégration à l'intérieur d'au moins l'une des périodes d'amorçage.

**10.** Procédé selon la revendication 8 ou 9, dans lequel le composant traversé par le courant est une résistance ohmique, en particulier une résistance en dérivation, sur le trajet d'amorçage du système (101) .

**11.** Procédé selon la revendication 8 ou 9, dans lequel le composant traversé par le courant est une piste conductrice à résistance interne connue dont est muni le système (101).

**12.** Procédé selon la revendication 8 ou 9, dans lequel le composant traversé par le courant est un interrupteur pour synchroniser le système (101).

**13.** Procédé selon la revendication 12, dans lequel une détection de l'état de l'interrupteur est effectuée sur la base de la valeur mesurée déterminée.

**Fig. 1**

**Fig. 2**

Fig. 3

**100**

A(t) → [ A'(t) ]

**103**

X(t)<sub>(ANALOG)</sub> →

**104.1**

[ U/f ▷ ]

**104.2**

EN₁
CLK   Σ1
RESET

**105**

[ Σ1 / Σ2 ]

X̄<sub>int</sub>

CLK

**102**

EN₁
CLK   Σ2
RESET

PARAMETRIERUNG

**106**

**Fig. 4**

---

**100**

A(t) → [ A'(t) ]

**103**

X(t)<sub>(ANALOG)</sub> →

**104.1**

[ ∫ ΔΣ ▷ ]

**104.2**

EN₁
EN₂   Σ1
CLK
RESET

**105**

[ Σ1 / Σ2 ]

X̄<sub>int</sub>

CLK

**102**

EN₁
CLK   Σ2
RESET

PARAMETRIERUNG

**106**

**Fig. 5**

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10359224 A1

- US 20070109821 A